(19) Europäisches Patentamt
European Patent Office
Office européen des brevets

(11) **EP 2 756 029 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **12762532.5**

(22) Anmeldetag: **07.09.2012**

(51) Int Cl.:
**C08J 3/20** (2006.01)     **C08J 5/18** (2006.01)
**B01F 15/04** (2006.01)     **B29B 7/88** (2006.01)
**B01F 13/10** (2006.01)     **B01F 15/00** (2006.01)

(86) Internationale Anmeldenummer:
**PCT/EP2012/003767**

(87) Internationale Veröffentlichungsnummer:
**WO 2013/037468 (21.03.2013 Gazette 2013/12)**

(54) **GEFÄRBTE POLYMERE FOLIE, VERFAHREN UND VORRICHTUNG ZUR HERSTELLUNG DER FOLIE**

COLOURED FOIL, PROCESS AND DEVICE FOR THE MANUFACTURE OF THE FOIL

FEUILLE COLORÉE EN POLYMÈRE, DISPOSITIF ET PROCÉDÉ DE FABRICATION DE FEUILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2011 DE 102011113543**

(43) Veröffentlichungstag der Anmeldung:
**23.07.2014 Patentblatt 2014/30**

(73) Patentinhaber: **Klöckner Pentaplast GmbH**
**56412 Heiligenroth (DE)**

(72) Erfinder:
• **KOHLERT, Christian**
**56414 Oberahr (DE)**
• **SCHMIDT, Bernd**
**54614 Gackenbach (DE)**
• **SCHNABEL, Andreas**
**56410 Montabaur (DE)**
• **MICHELS, Frank**
**56412 Heilberscheid (DE)**
• **RAZIGRAEV, Alexander**
**St. Petersburg 196105 (RU)**
• **CHISTYAKOVA, Tamara**
**St. Petersburg (RU)**
• **SCHAAF, Marco**
**56414 Molsberg (DE)**

(74) Vertreter: **Plate, Jürgen**
**Plate Schweitzer Zounek**
**Patentanwälte**
**Rheingaustrasse 196**
**65203 Wiesbaden (DE)**

(56) Entgegenhaltungen:
**EP-A1- 0 816 815       EP-A2- 0 191 338**
**DE-A1- 3 303 766       JP-A- 54 023 662**
**JP-A- 60 209 141       US-A- 5 723 517**
**US-A- 5 756 020        US-A- 6 130 752**
**US-A1- 2003 168 758    US-A1- 2003 230 654**
**US-A1- 2009 225 341**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Herstellung einer Folie wie in Ansprüchen 1 bis 3 definiert.

Zudem betrifft die Erfindung eine Vorrichtung, wie in Ansprüchen 4 bis 12 definiert, für das Verfahren sowie eine nach dem Verfahren hergestellte Folie wie in Ansprüchen 13 bis 14 definiert.

Verfahren zur Herstellung von gefärbten Formkörpern sind bekannt.

US 5,723,517 A offenbart ein System zur Herstellung von gefärbten polymeren Formmassen, welches ein Gelieraggregat mit einer Zuführung für polymeren Werkstoff und einer Dosiervorrichtung für Farbstoffe, einen Farbsensor und eine elektronische Steuerung umfasst. Mittels des Farbsensors wird die Farbe der von dem Gelieraggregat ausgestoßenen Formmasse gemessen und als Signal an die elektronische Steuerung übertragen. Die elektronische Steuerung umfasst einen Algorithmus zum Regeln der Dosiervorrichtung bzw. der dem Gelieraggregat pro Zeiteinheit zugeführten Farbstoffmenge. Die in der US 5,723,517 A beschriebenen Versuche wurden mit einem Zwillingsschraubenextruder mit einem Schneckendurchmesser von 28 mm durchgeführt, wobei an dem System eine Verzögerungs- bzw. Reaktionszeit von 40 s beobachtet wurde. Der Begriff der Verzögerungs- bzw. Reaktionszeit bezeichnet die Zeit, die zwischen einer impulsartigen Störung und deren Korrektur durch das System verstreicht - in Fachkreisen häufig auch Impulsantwort genannt. Im vorliegenden Fall entspricht die Impulsantwort der Zeitspanne zwischen einer kurzzeitig erhöhten Zufuhr eines Farbstoffes und der automatischen Rückstellung der Farbe der extrudierten Formmasse auf einen vorgegebenen Sollwert. Die US 5,723,517 A enthält keinen Hinweis auf den Extruderdurchsatz, d.h. die in dem Zwillingsschraubenextruder pro Zeiteinheit durchgesetzte Polymermenge. Daher ist es nicht möglich, die während der Impulsantwort von 40 s durchgesetzte Menge an Polymer zu ermitteln. Der Schneckendurchmesser von lediglich 28 mm deutet daraufhin, dass es sich bei dem in der US 5,723,517 A verwendeten Zwillingsschraubenextruder um einen Laborextruder mit einem geringen Durchsatz von wenigen kg bis zu 20 kg pro Minute handelt. Dementsprechend beträgt die während der Impulsantwort durchgesetzte Menge an Polymer weniger als 20 kg.

EP 0 191 338 A2 betrifft einen Extruder und ein Extrusionsverfahren, bei dem Dosiereinrichtungen für Farbkonzentrate und Zusatzstoffe mithilfe des Signals eines an dem Austragsende des Extruders angeordneten Spektrometers geregelt werden, um die Zugabe in einen mit Polymer beschickten Aufgabetrichter zu steuern und Abweichungen der Farbintensität eines Extrudats von einem vorgegebenen Muster auszugleichen.

US 6,130,752 A offenbart ein Online-Farbüberwachungs- und -steuerungssystem und ein Verfahren, bei dem ein Farbstoff in einem bestimmten Mengenverhältnis zugeführt wird, um einem Erzeugnis, wie bespielweise Kunststofffasern eine vorgegebene Farbe zu verleihen. Die Farbe des Produkts wird erfasst und verarbeitet, um ein Steuersignal zum Einstellen der zugeführten Farbmittelmenge zu erzeugen.

JP 54 023 662 A beschreibt ein Schmelzextrusionsverfahren zur Herstellung einer Kunststofffolie mit gleichförmiger Farbdichte, bei dem die Farbdichte der extrudierten Schmelze gemessen und die Drehzahl der Extruderschnecke entsprechend dem Messsignal gesteuert wird.

US 2003/230654 A1 betrifft ein Verfahren zur Herstellung von Kunststoffmaterialien, wie zum Beispiel Kunststoffholz, bei dem wiederverwertbare Kunststoffe in mindestens zwei Kategorien sortiert, zerkleinert und mit Farbkonzentraten gemischt werden, um ein Kunststoffmaterial mit vorgegebener Farbe zu erhalten.

DE 33 03 766 A1 offenbart ein Verfahren und eine Schaltung zur Dosierung mehrerer Komponenten bei der Extrusion von Polymeren, wobei in einer Mehrkomponentendosiervorrichtung eine Hauptkomponente kontinuierlich erfasst und die Mengenanteile weiterer Komponenten in Abhängigkeit von der Hauptkomponente berechnet und mithilfe von Fördereinrichtungen zugeführt werden.

US 5,756,020 A betrifft ein Verfahren zur Herstellung von lösungsgefärbten extrudierten Gegenständen aus thermoplastischem Polymer, wobei jedes Färbemittel in einem separaten Farbkonzentrat enthalten ist und jedes Farbkonzentrat durch eine separate gravimetrische Fördereinrichtung einem Extruder zugeführt und mit dem thermoplastischen Polymer schmelzgemischt wird.

US 2009/0225341 A1 offenbart eine Prüfkarte für die Korrektur von Farbtönen mit einer Vielzahl von rechteckigen, jeweils zu einem Farbton korrespondierenden Flächen, wobei die Flächen derart zueinander angeordnet sind, dass verschiedenfarbige Flächen mit annähernd gleichem Hue-Wert benachbart sind in einer Richtung, die entlang einer kurzen Kante der Flächen verläuft.

In der industriellen Fertigung von Formkörpern aus Kunststoff wird eine hohe Produktivität bzw. ein hoher Durchsatz angestrebt. Beispielsweise wird bei der Herstellung von Kunststofffolien aus Polyvinylchlorid (PVC), Polyethylenterephthalat (PET) oder Polyolefinen, wie Polypropylen (PP) üblicherweise ein Produktionsdurchsatz bzw. eine Foliengeschwindigkeit von 60 bis 200 m/min bzw. 1,0 bis 3,4 m/s erzielt, wobei der Massendurchsatz je nach Dicke der hergestellten Folie 100 bis 4000 kg/h bzw. 1,7 bis 67 kg/s beträgt. Bei derartigen Produktionsgeschwindigkeiten ist eine Farbkontrolle und -regelung mit einer möglichst kurzen Impulsantwort erforderlich.

Im Weiteren ist zu berücksichtigen, dass in der industriellen Fertigung während einer Produktionskampagne oftmals die Zusammensetzung des polymeren Basismaterials variiert. So wird dem Basismaterial häufig Rezyklat, beispielsweise bei der Folienproduktion in Form von kontinuierlich anfallendem Randabschnitt, beigemengt. Je nach Menge, Verteilung und Farbe des Rezyklats können Zusammensetzung und Farbe des Basismaterials beträchtlich variieren. Mit den bekannten Systemen für Farbkontrolle und -regelung ist es nicht in jedem Fall möglich, die zunehmend verschärften Qualitätsanforderungen für Formkörper aus Kunststoff und insbesondere für Kunststofffolien zu erfüllen.

Dementsprechend hat die vorliegende Erfindung die Aufgabe, ein Verfahren zur Herstellung von polymeren Folien mit Farbkontrolle bereitzustellen.

Diese Aufgabe wird gelöst durch ein Verfahren, umfassend die Schritte:

(a) Plastifizieren eines polymeren Werkstoffes und Vermischen mit einem oder mehreren Farbstoffen zu einer Formmasse mittels eines mit einer Dosiereinrichtung für Farbstoffe ausgestatteten Gelieraggregats;

(b) optionales Zwischenlagern der in Schritt (a) erhaltenen Formmasse;

(c) Beschicken einer Formeinrichtung mit der Formmasse; und

(d) Erzeugen der Folie;

wobei in Schritt (d) an der Folie mittels eines weiteren Kolorimeters weitere Farbwerte gemessen und als Signal an die elektronische Steuerung übertragen werden, das Mengenverhältnis von Farbstoff zu polymerem Werkstoff mittels eines Kolorimeters und einer elektronischen Steuerung automatisch geregelt und in Schritt (a) an der in dem Gelieraggregat befindlichen Formmasse Farbwerte gemessen und als Signal an die elektronische Steuerung übertragen werden.

Vorteilhafte Weiterbildungen des erfindungsgemäßen Verfahrens zeichnen sich dadurch aus, dass:

- der dem Gelieraggregat zugeführte polymere Werkstoff Rezyklat enthält; und/oder
- die Menge des dem Gelieraggregat pro Zeiteinheit zugeführten polymeren Werkstoffes gemessen und als Signal an die elektronische Steuerung übertragen wird.

Im Weiteren hat die vorliegende Erfindung die Aufgabe eine Vorrichtung für die Erzeugung von polymeren Formmassen und Formkörpern mit geringer Farbschwankung zu schaffen.

Diese Aufgabe wird gelöst durch eine Vorrichtung, umfassend ein mit einer Dosiereinrichtung für einen oder mehrere Farbstoffe ausgestattetes Gelieraggregat zum Plastifizieren und Vermischen eines polymeren Werkstoffs mit Farbstoff zu einer Formmasse, ein erstes Kolorimeter, eine mit der Dosiereinrichtung und dem ersten Kolorimeter verbundene elektronische Steuerung zur automatischen Regelung des Mengenverhältnisses von Farbstoff zu polymerem Werkstoff und eine Formeinrichtung zum Erzeugen einer Folie, wobei das erste Kolorimeter eingerichtet ist, von der in dem Gelieraggregat enthaltenen Formmasse emittierte elektromagnetische Strahlung, insbesondere sichtbares Licht mit Wellenlängen im Bereich von 380 bis 780 nm zu detektieren und die Vorrichtung ein zweites, mit der elektronischen Steuerung verbundenes Kolorimeter umfasst, das eingerichtet ist, von der Folie emittierte elektromagnetische Strahlung zu detektieren.

Vorteilhafte Weiterbildungen der erfindungsgemäßen Vorrichtung zeichnen sich dadurch aus, dass:

- das erste Kolorimeter mittels eines Lichtleiters, insbesondere mittels einer Glasfaser mit dem Innenraum des Gelieraggregates gekoppelt ist;

- die Vorrichtung eine mit der elektronischen Steuerung verbundene Zuführung zum Beschicken des Gelieraggregates mit polymerem Werkstoff umfasst, wobei die elektronische Steuerung und die Zuführung eingerichtet sind, die Menge des dem Gelieraggregat pro Zeiteinheit zugeführten polymeren Werkstoffs zu regeln;

- die Vorrichtung eine mit der elektronischen Steuerung verbundene Zuführung zum Beschicken des Gelieraggregates mit polymerem Werkstoff umfasst, wobei die Zuführung eingerichtet ist, die Menge des dem Gelieraggregat pro Zeiteinheit zugeführten polymeren Werkstoffs zu messen und als Signal an die elektronische Steuerung zu übertragen;

- das erste und zweite Kolorimeter unabhängig voneinander einen oder mehrere optisch absorbierende Bandpassfilter oder wellenlängendispersive Beugungselemente, wie Gitter oder Prismen sowie einen oder mehrere optoelektronische Sensoren, wie CCD- oder CMOS-Sensoren umfassen; und

- die Vorrichtung einen oder mehrere mit der elektronischen Steuerung verbundene Temperatursensoren, wie eine Infrarotkamera zum Messen der Temperatur der Formmasse und/oder der Folie umfasst.

Die vorliegende Erfindung hat zudem die Aufgabe, eine farbige Folie mit geringer Farbschwankung bereit zu stellen.

Diese Aufgabe wird gelöst durch eine Folie aus einem polymeren Werkstoff und Farbstoffen mit einer Breite von 0,1 bis 6 m, einer Länge von 100 bis 10000 m, lokalen Farbwerten $E_k = (L^*_k, a^*_k, b^*_k)$ und einem mittleren Farbwert $E_M = (L^*_M, a^*_M, b^*_M)$, wobei

$$L^*_M = \frac{1}{N} \sum_{k=1}^{N} L^*_k \qquad ;$$

$$a^*_M = \frac{1}{N} \sum_{k=1}^{N} a^*_k \qquad ;$$

$$b^*_M = \frac{1}{N} \sum_{k=1}^{N} b^*_k \qquad ;$$

N eine natürliche Zahl von 5 bis 100 ist und Abweichungen $\Delta E_k$ der lokalen Farbwerte $E_k$ von dem mittleren Farbwert $E_M$ kleiner als 1,0 sind, mit

$$\Delta E_k = \sqrt{(L^*_k - L^*_M)^2 + (a^*_k - a^*_M)^2 + (b^*_k - b^*_M)^2}$$

und die Farbwerte $E_k$ in Längsrichtung der Folie in einem Abstand von $s \pm 0{,}05 \cdot s$ mit s von 1 bis 100 m gemessen werden.

Eine vorteilhafte Weiterbildung der erfindungsgemäßen Folie zeichnet sich dadurch aus, dass die Abweichungen $\Delta E_k$ der lokalen Farbwerte $E_k$ von dem mittleren Farbwert $E_M$ kleiner als 0,8 , vorzugsweise kleiner als 0,6 und insbesondere kleiner als 0,4 sind.

Die Erfindung wird nachfolgend anhand von Figuren näher erläutert. Es zeigen:

Fig. 1     eine Vorrichtung zur Herstellung von gefärbten polymerenFolien;
Fig. 2     ein Steuerungskonzept für die Vorrichtung; und
Fig. 3     eine Regelung für den Farbwert der polymerenFolie.

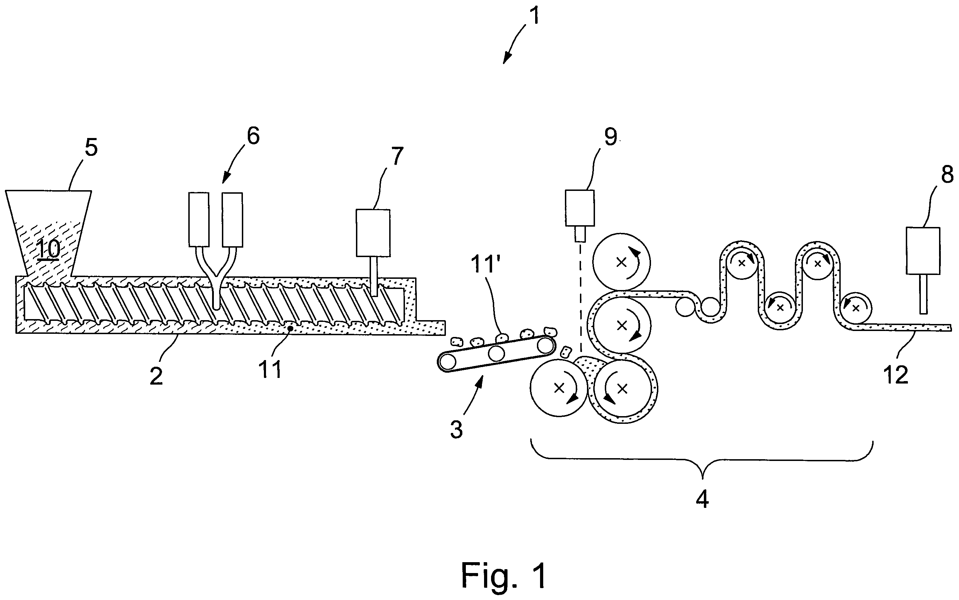

Fig. 1 zeigt eine Vorrichtung 1 mit einem Gelieraggregat 2, einer Zuführung 5 zum Beschicken des Gelieraggregates 2 mit einem polymeren Werkstoff 10, einer Dosiereinrichtung 6 für einen oder mehrere Farbstoffe und einem Kolorimeter 7. Mittels des Gelieraggregats 2 wird der polymere Werkstoff 10 plastiziert und mit einem oder mehreren über die Dosiereinrichtung 6 zugeführten Farbstoffen zu einer Formmasse 11 gemischt. Der polymere Werkstoff 10 umfasst ein Basismaterial und gegebenenfalls Rezyklat. Das Basismaterial, das bevorzugt in Form eines Granulats vorgelegt wird, umfasst ein Homo- oder Copolymer, wie beispielsweise Polyvinylchlorid, ein Polyolefin, einen Polyester, Polyethylen, Polypropylen, Polyamid, Polystyrol, Polyethylenterephthalat, Celluloseacetat, Polymethylmethacrylat oder Polylactid. Neben dem Polymer kann das Basismaterial Additive enthalten, wie Fasern natürlichen und/oder synthetischen Ursprungs, Weichmacher und Stabilisatoren. Gleiches gilt für die Zusammensetzung des Rezyklats. Vorzugsweise entspricht die Zusammensetzung des Rezyklats im Wesentlichen der Zusammensetzung des Basismaterials. Zudem kann das Rezyklat einen oder mehrere Farbstoffe enthalten.

Das Gelieraggregat 2 ist vorzugsweise als Ko-Kneter-Extruder, Planetwalzen-Extruder oder als Einschnecken- oder Zweischnecken-Extruder ausgebildet. Ein Auslass des Gelieraggregates 2 ist als einfache Düse mit kreis- oder polygonförmigem Querschnitt, als Spinndüse für Filamente oder als Breitschlitzdüse für Folien ausgebildet. In einer zweckmäßigen Ausführungsform der erfindungsgemäßen Vorrichtung 1 ist der Auslass des Gelieraggregates 2 als kreisförmige Düse ausgebildet und mit einem Zerhacker ausgestattet, welcher die strangförmig extrudierte Formmasse 11 in zylinderförmige Teilstücke 11' auftrennt.

In einer zweckmäßigen Weiterbildung der erfindungsgemäßen Vorrichtung 1 umfasst die Zuführung 5 einen Vorlagebehälter zur Aufnahme des polymeren Werkstoffs 10 sowie eine Födereinrichtung, wie beispielsweise eine Förderschnecke, mittels welcher die dem Gelieraggregat 2 pro Zeiteinheit zugeführte Menge an polymerem Werkstoff 10, im Folgenden auch als Durchsatz bezeichnet, variiert werden kann. Die Fördereinrichtung der Zuführung 5 umfasst einen regelbaren elektrischen Antrieb, der mit einer elektronischen Steuerung verbindbar ist. Mittels der elektronischen Steuerung kann der Antrieb der Fördereinrichtung geregelt und die Menge des dem Gelieraggregat 2 pro Zeiteinheit zuge-

**4**

führten Werkstoffs 10, d.h. der Durchsatz automatisch und kontinuierlich an die Produktion angepasst werden.

In einer vorteilhaften Weiterbildung der erfindungsgemäßen Vorrichtung 1 ist die Zuführung 5 mit einer Messeinrichtung für die kontinuierliche Erfassung des Durchsatzes an polymerem Werkstoff 10 ausgestattet. Die Messeinrichtung ist beispielsweise als elektronische Waage oder als Mikrowellen-Sender-Empfänger mit integrierter Auswerteelektronik ausgebildet und mit der elektronischen Steuerung verbindbar, sodass ein zum Durchsatz proportionales Signal an die elektronische Steuerung übertragbar ist. Diese Weiterbildung der erfindungsgemäßen Vorrichtung gestattet es, die Mengen an Farbstoffen, die dem plastifizierten polymeren Werkstoff 10 mittels der Dosiereinrichtung 6 pro Zeiteinheit hinzugefügt werden, im Voraus zu berechnen und an den Durchsatz bzw. den Massendurchsatz des polymeren Werkstoffs 10 in dem Gelieraggregat 2 anzupassen. Hierbei wird die Transferzeit des polymeren Werkstoffs 10 innerhalb des Gelieraggregats 2 berücksichtigt, d.h. die Zeit, die erforderlich ist, um den polymeren Werkstoff 10 von der Zuführung 5 bis zu dem/den Aufgabepunkten der Dosiereinrichtung 6 für die Farbstoffe zu transportieren. Wie nachstehend erläutert, ist der/die Aufgabepunkte der Dosiereinrichtung 6 für die Farbstoffe zwischen der Zuführung 5 und einem Auslass des Gelieraggregats 2 angeordnet.

Die Dosiereinrichtung 6 umfasst n Vorlagebehälter mit n = 1, 2, 3, 4, 5, 6, 7 oder 8 für pulverförmige oder flüssige Farbstoffe. Die Vorlagebehälter mit den Farbstoffen sind über separate Leitungen, die gegebenenfalls in eine Sammelleitung münden, mit dem Inneraum des Gelieraggregats 2 verbunden. Jeder der Vorlagebehälter oder jede der separaten Leitungen ist mit einer Fördereinrichtung, wie einer Pumpe oder einer Schnecke ausgestattet. Die Fördereinrichtung ist ausgebildet, den Farbstoff unter einem Druck von 1 bar bis zu einigen Hundert bar in das Gelieraggregat 2 zu fördern, wobei der von der Fördereinrichtung erzeugte Druck höher ist als der Druck, der beim Plastifizieren des polymeren Werkstoffs 10 in dem Gelieraggregat 2 aufgebaut wird. Jede der Fördereinrichtungen für Farbstoff umfasst einen regelbaren elektrischen Antrieb, der mit der elektronischen Steuerung verbindbar ist, so dass die dem Gelieraggregat pro Zeiteinheit zugeführte Menge jedes der Farbstoffe separat mittels der elektronischen Steuerung regelbar ist. Vorzugsweise werden flüssige Farbstoffe eingesetzt, die mittels einer elektrisch angetriebenen Pumpe und einer mit einer Düse ausgestatteten Lanze in das Gelieraggregat 2 eingespritzt werden.

Die Zuführungen bzw. Lanzen für die Farbstoffe sind, bezogen auf einen Abstand D zwischen dem Punkt, an dem die Zuführung 5 für polymeren Werkstoff 10 in das Gelieraggregat 2 mündet und dem Auslass des Gelieraggregates 2, in Förder- bzw. Längsrichtung des Gelieraggregates 2 in einem Abstand von D/3 bis 2·D/3 von der Mündung der Zuführung 5 angeordnet.

Das Kolorimeter 7 bzw. der Messpunkt des Kolorimeters 7 ist in Förder- bzw. Längsrichtung des Gelieraggregates 2 zwischen der Dosiereinrichtung 6 und dem Auslass des Gelieraggregates 2 angeordnet. Vorzugsweise werden mehrere Kolorimeter 7 verwendet, um den Farbwert der Formmasse 11 an verschiedenen Positionen innerhalb des Gelieraggregates 2 zu messen und aus den Einzelmessungen einen gemittelten Farbwert zu berechnen.

Das Kolorimeter 7 umfasst eine Abbildungsoptik, einen oder mehrere optoelektronische Sensoren und gegebenenfalls wellenlängendispersive Beugungselemente oder Farbfilter. Die Abbildungsoptik ist vorzugsweise als Lichtleiter aus Glas oder als Glasfaseroptik ausgebildet. Die Eingangsseite der Abbildungsoptik ist derart in dem Gelieraggregat 2 angeordnet, dass ein Teil der von der Formmasse 11 emittierten elektromagnetischen Strahlung, insbesondere sichtbares Licht mit Wellenlängen im Bereich von 380 bis 780 nm in den Lichtleiter bzw. in die Glasfaser eingekoppelt und direkt oder über die optionalen Beugungselemente oder Farbfilter auf einen oder mehrere optoelektronische Sensoren abgebildet wird. Zudem ist eine Lichtquelle vorgesehen, um die in dem Gelieraggregat 2 enthaltene Formmasse 11 zu beleuchten.

Sofern die Lichtquelle, bei der es sich z.B. um eine Halogenlampe oder eine LED (Light Emitting Diode) handelt, in dem Kolorimter 7 integriert ist, wird das von der Lichtquelle emittierte Licht über einen Strahlteiler in den Lichtleiter eingekoppelt, um die Formmasse 11 zu beleuchten. Ein Teil des von der Formmasse 11 emittierten bzw. reflektierten Lichts wird über den Lichtleiter, den Strahlteiler und die optionalen Beugungselemente oder Farbfilter auf den optoelektronischen Sensor abgebildet. In einer alternativen Ausführungsform der Erfindung wird ein separater Lichtleiter oder ein Fenster in der Wand des Gelieraggregates 2 verwendet, um die Formmasse 11 mit dem Licht der Lichtquelle zu beleuchten.

Das Kolorimeter 7 kann als Spektrometer ausgebildet sein und mehrere, insbesondere drei Farbfilter, ein Reflexions- oder Transmissionsgitter oder ein Prisma als wellenlängendispersives Beugungselement umfassen. Bei der Ausführung als Spektrometer werden als elektrooptische Sensoren vorzugsweise Fotodioden oder ein linearer CCD- oder CMOS-Zeilensensor mit beispielsweise 8k = 8192 Pixeln verwendet, um die spektrale Intensitätsverteilung des von der Formmasse 11 emittierten und durch die Farbfilter transmittierten bzw. von dem Beugungsgitter oder Prisma gemäß seiner Wellenlänge gebeugten Lichtes zu detektieren.

Im Weiteren kann das Kolorimeter 7 als Farbkamera ausgebildet sein und einen CCD- oder CMOS-Sensor mit Farbfilter, insbesondere mit Bayer-, Sony RGBE-, Super-CCD EXR-, RGBW-, CYGM- oder CMYW-Filter umfassen.

In einer anderen Ausführungsform ist das Kolorimeter 7 als Farbkamera mit drei CCD- oder CMOS-Sensoren und einem Prisma, welches das Bild in einen Rot-, Grün- und Blauanteil aufspaltet, ausgebildet.

Vorzugsweise hat die mittels des Kolorimeters 7 abgebildete und vermessene Fläche bzw. der hierzu korrespondierende Strahlquerschnitt des von der Formmasse 11 reflektierten bzw. gestreuten und von dem Kolorimeter 7 detektierten Lichtes eine Größe von 0,2 mm$^2$ bis 20 cm$^2$. Das Kolorimeter 7 bzw. die Abbildungsoptik des Kolorimeters 7 wird in dem Gelieraggregat 2 so angeordnet, dass ausschließlich von der Formmasse 11 und kein von periodisch umlaufenden mechanischen Komponenten, wie Extruderschnecken, Knetzähnen oder Knetflügeln reflektiertes oder gestreutes Licht deteketiert wird. In einer alternativen Ausführungsformen der Erfindung wird das Ausgangssignal des Kolorimeters 7 elektronisch oder digital bzw. softwaretechnisch gefiltert, um die periodischen Störsignale von mechanischen Komponenten zu eliminieren.

In einer vorteilhaften Ausführungsform der Vorrichtung 1 ist das Gelieraggregat 2 mit einem oder mehreren Temperatursensoren, insbesondere mit Thermoelementen ausgestattet, die an der Innenseite des Gelieraggregates 2 nahe der Messposition des Kolorimeters 7 angeordnet und eingerichtet sind, die Temperatur der Formmasse 11 zu ermitteln. In einer anderen Ausfuhrungsform der erfindungsgemäßen Vorrichtung 1 ist ein Temperatursensor als separate oder in das Kolorimeter 7 integrierte Infrarotkamera ausgebildet, wobei ein Teil der von der Formmasse 11 emittierten Infrarotstrahlung über einen Lichtleiter aus Glas auf einen elektrooptischen oder pyroelektrischen Sensor der Infrarotkamera abgebildet wird. Der Temperatursensor ist mit der elektronischen Steuerung verbindbar, so dass ein zur Temperatur der Formmasse 11 proportionales Signal an die elektronische Steuerung übertragbar ist. Die Temperatur der Formmasse 11 bzw. das von dem Temperatursensor an die elektronische Steuerung übertragene Signal kann zur Kalibrierung des mit dem Kolorimeter 7 gemessenen Farbwertes der Formmasse 11 verwendet werden.

Wie vorstehend dargelegt, bilden das Gelieraggregat 2 mit der Zuführung 5, die Dosiereinrichtung 6, das Kolorimeter 7 und die elektronische Steuerung die erfindungswesentlichen Komponenten der Vorrichtung 1. In zweckmäßigen Weiterbildungen der Erfindung umfasst die Vorrichtung 1 zudem eine Formeinrichtung zum Erzeugen einer Folie. In Fig. 1 ist als Formeinrichtung beispielhaft eine Kalandereinrichtung 4 für Folien 12 dargestellt. Die Kalandereinrichtung 4 umfasst einen Kalanderwalzenstuhl mit k Kalanderwalzen mit k = 3, 4, 5, 6, 7, 8, 9, 10, 11 oder 12, eine oder mehrere Abzugwalzen und gegebenenfalls einen in Fig. 1 nicht dargestellten Querstreckrahmen, die in Maschinenrichtung, d.h. in Laufrichtung der Formmasse 11' bzw. der Folie 12 nach dem Kalanderwalzenstuhl angeordnet sind.

Von dem Gelieraggregat 2 extrudierte Formmasse 11' wird mittels einer Transporteinrichtung 3 auf eine erste Kalanderwalze bzw. zu einem ersten Walzenspalt zwischen einer ersten und zweiten Kalanderwalze geführt. Die erste und zweite, sowie gegebenenfalls weitere Kalanderwalzen sind temperiert, wobei die Temperatur der ersten Kalanderwalze auf einen Wert im Bereich von 160 bis 210 °C geregelt wird. Dementsprechend ist die vor dem ersten Walzenspalt befindliche Formmasse 11' plastifiziert. Pro Zeiteinheit wird ein Teil der Formmasse 11' durch den ersten Walzenspalt abgezogen und auf der zweiten Kalanderwalze zu dem zweiten Walzenspalt zwischen der zweiten und dritten Kalanderwalze geführt. Nachdem die Formmasse 11' bzw. die Folie 12 den Walzenspalt des letzten Kalanderwalzenpaares durchlaufen hat, wird sie über die Abzugwalzen sowie gegebenenfalls durch den optionalen Querstreckrahmen geführt. Mittels der Abzugwalzen und des optionalen Querstreckrahmens kann die Folie 12 in Maschinenrichtung, respektive senkrecht zur Maschinenrichtung, d.h. in Transversalrichtung gestreckt werden.

In einer vorteilhaften Ausführungsform der erfindungsgemäßen Vorrichtung 1 ist ein Füllstanddetektor 9 vorgesehen, um die Menge der vor dem ersten Walzenspalt befindlichen Formmasse 11' zu messen. Vorzugsweise beruht das Messprinzip des Füllstanddetektors 9 auf berührungsloser Laufzeitmessung mittels Ultraschall, Radar oder Laserlicht, wobei die vor dem ersten Walzenspalt stehende Formmasse 11' mit der jeweiligen Strahlung beaufschlagt und die von der Formmasse 11' reflektierte Strahlung detektiert wird. Bei der Laufzeitmessung mittels Laserlicht oder Radar, insbesondere mittels Mikrowellen mit einer Frequenz im Bereich von 6 bis 25 GHz, werden das frequenzmodulierte Dauerstrichverfahren (FMCW) oder das Pulsverfahren eingesetzt.

Der Füllstanddetektor 9 ist mit der elektronischen Steuerung verbindbar, so dass ein Signal, das proportional ist zur Menge der vor dem ersten Walzenspalt stehenden Formmasse 11', an die elektronische Steuerung übertragen und zur automatischen Regelung der pro Zeiteinheit dem Gelieraggregat 2 mittels der Zuführung 5 zugeführten Menge an polymerem Werkstoff 10 genutzt werden kann.

Vorzugsweise umfasst die erfindungsgemäße Vorrichtung 1 ein weiteres Kolorimeter 8, das eingerichtet und in geeigneter Position angeordnet ist, um einen Farbwert der mittels der Vorrichtung 1 erzeugten Folie 12 zu messen und an die elektronische Steuerung zu übertragen. Das Kolorimeter 8 kann in gleicher Weise wie das Kolorimeter 7 ausgestaltet sein. Ebenso können sich das Messprinzip und die Ausgestaltung der Kolorimeter 7 und 8 voneinander unterscheiden. Insbesondere ist für das Kolorimeter 8 ein Lichtleiter oder eine Glasfaser nicht erforderlich, um das von der Folie 12 emittierte Licht auf den elektrooptischen Sensor zu lenken. Vielmehr kann das Kolorimeter 8 mit einem gewöhnlichen Kameraobjektiv ausgestattet und in Sichtlinie zu der Folie 12 angeordnet sein.

Im Weiteren ist eine Lichtquelle vorgesehen, um die Folie 12 in definierter und reproduzierbarer Weise zu beleuchten. Die Lichtquelle, bei der es sich z.B. um eine Halogenlampe oder eine LED (Light Emitting Diode) handelt, kann in dem Kolorimter 8 integriert oder hiervon separat ausgebildet sein.

Vorzugsweise hat die mittels des Kolorimeters 8 abgebildete und vermessene Fläche bzw. der hierzu korrespondierende Strahlquerschnitt des von dem Kolorimeter 8 detektierten Lichtes eine Größe von 0,2 mm$^2$ bis 60 cm$^2$.

In einer zweckmäßigen Ausführungsform der erfindungsgemäßen Vorrichtung 1 ist ein zusätzlicher Temperatursensor, insbesondere eine Infrarotkamera vorgesehen, um die Temperatur der Folie 12 an der Messposition des Kolorimeters 8 zu bestimmen. Der Temperatursensor ist mit der elektronischen Steuerung verbindbar, so dass ein zur Temperaturder Folie 12 proportionales Signal an die elektronische Steuerung übertragbar ist und zur Kalibrierung des von dem Kolorimeter 8 gemessenen Farbwertes verwendet werden kann.

Im Weiteren ist im Rahmen der Erfindung vorgesehen, dass ein Antrieb des Gelieraggregates 2 mit der elektronischen Steuerung verbindbar ist und die Drehzahl des Gelieraggregates 2 mittels der elektronischen Steuerung geregelt und/oder erfasst und in dem Steuerprogramm als Parameter verwendet werden kann.

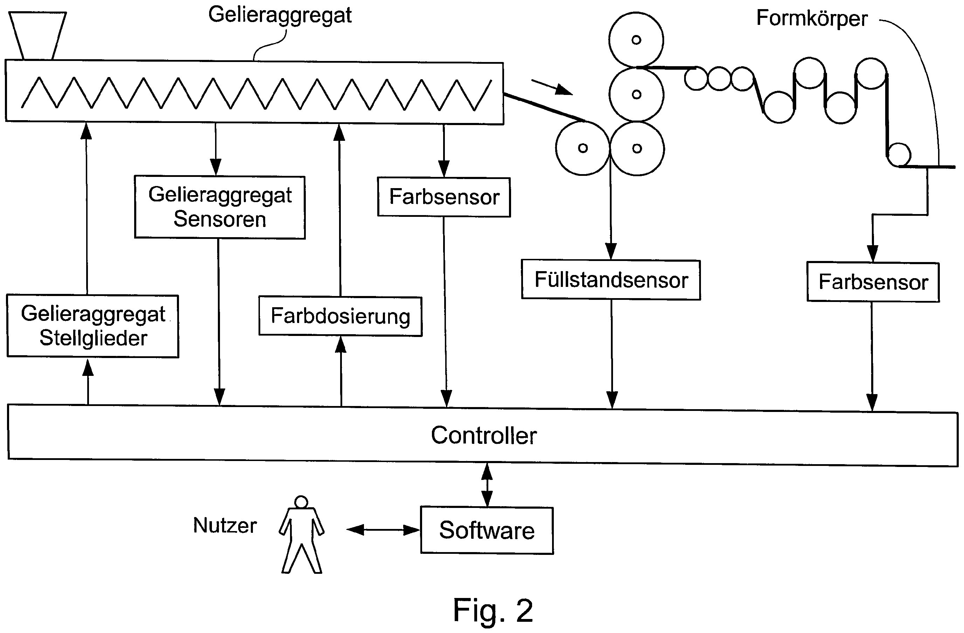

Fig. 2 zeigt in anschaulicher Weise das Steuerungskonzept der Erfindung, wonach das Gelieraggregat und die Formeinrichtung diverse Stellglieder, Messeinrichtungen und Sensoren umfassen, die an einen zentralen softwaregesteuerten Controller bzw. eine elektronische Steuerung angebunden sind. Die Ausgangssignale der Messeinrichtungen und Sensoren werden an die elektronische Steuerung übertragen. Von der elektronischen Steuerung bzw. den darin enthaltenen Schnittstellen werden die Ausgangsignale digitalisiert und als variable Parameter in dem Steuerprogramm verarbeitet.

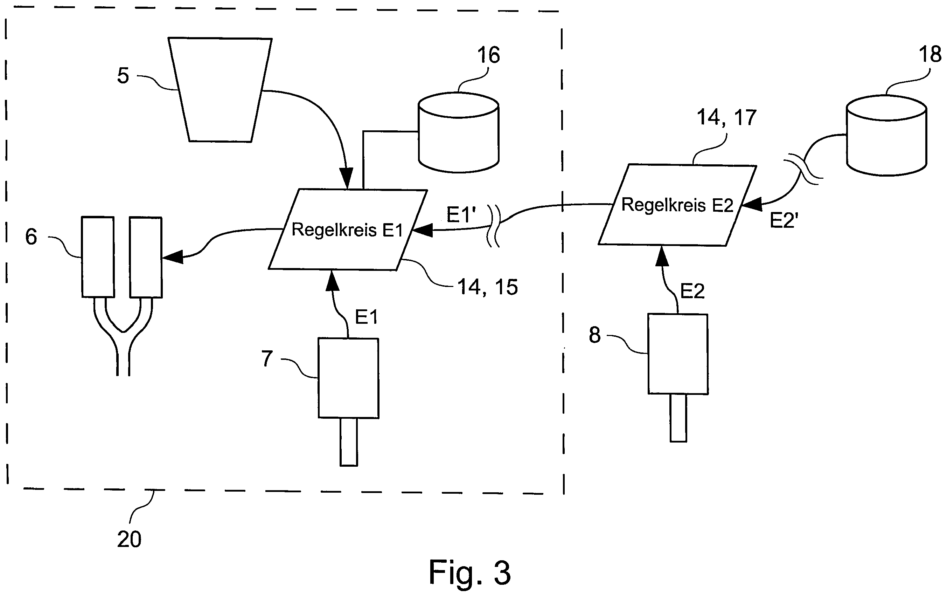

Fig. 3 zeigt die automatische Regelung des Farbwertes E1 der Formmasse 11 anhand eines Blockdiagrams. Wie vorstehend dargelegt, bilden das Gelieraggregat 2 mit der Zuführung 5, die Dosiereinrichtung 6, das Kolorimeter 7 und eine in Fig. 3 mit dem Bezugszeichen 14 gekennzeichnete elektronische Steuerung die erfindungswesentlichen Komponenten der Vorrichtung 1. Die elektronische Steuerung 14 umfasst bzw. implementiert einen ersten Regelkreis 15 und gegebenenfalls einen zweiten Regelkreis 17. Die elektronische Steuerung 14 ist vorzugsweise als speicherprogrammierte Steuerung (SPS) oder als Computer mit dem Betriebssystem Microsoft Windows oder Linux ausgebildet und umfasst elektronische Schnittstellen zur Anbindung von Stellgliedern und Sensoren, wie Elektromotoren, Kolorimeter und Thermoelementen. Neben einem Mikroprozessor umfasst die elektronische Steuerung 14 Arbeitsspeicher, insbesondere DRAM oder Flash-EEPROM zur Aufnahme eines Steuerprogramms, das auf einem lokalen oder externen Speichermedium, insbesondere auf einer Festplatte gespeichert ist und beim Einschalten bzw. bei der Einrichtung der elektronischen Steuerung 14 in den Arbeitsspeicher geladen und dort ggf. permanent gehalten wird.

Zweckmäßig ist die elektronische Steuerung 14 mit einem Netzwerk, insbesondere mit einem Lokal Area Network (LAN) verbunden, so dass Daten und Programme von und zu Computern in dem Netzwerk übertragen werden können. Vorzugsweise wird ein Netzwerk auf Basis des Ethernet-Protokolls bzw. TCP/IP eingesetzt.

In einer ersten, in Fig. 3 durch das gestrichelte Rechteck 20 angedeuteten Ausführungsform der Erfindung sind die Zuführung 5, die Dosiereinrichtung 6 und das Kolorimeter 7 mit der elektronischen Steuerung 14 verbunden.

In einer Weiterbildung der Erfindung ist zudem ein in Fig. 3 nicht gezeigter Temperatursensor vorgesehen, der eingerichtet ist, die Temperatur der Formmasse 11 an bzw. nahe der Messposition für den Farbwert E1 zu ermitteln und der mit der elektronischen Steuerung 14 verbunden ist. Das von dem Temperatursensor an die elektronische Steuerung 14 übertragene Signal dient zur Kalibrierung des mit dem Kolorimeter 7 gemessenen Farbwertes E1.

Das Steuerprogramm der elektronischen Steuerung 14 umfasst eine Befehlssequenz, die je nach Rechenleistung und Taktfrequenz des Mikroprozessors der elektronischen Steuerung 14 einige Tausend bis einige Millionen Mal pro Sekunde ausgeführt wird. Die Befehlssequenz umfasst Befehle und Algorithmen zur Abfrage von Sensorsignalen und zur Berechnung und Ausgabe von Steuersignalen für Stellglieder. Das von dem Mikroprozessor der elektronischen Steuerung 14 ausgeführte Steuerprogramm implementiert einen ersten Regelkreis 15 für den Farbwert E1 der Formmasse 11. Wie vorstehend erläutert, ist eine elektronische oder softwaretechnische Filterung der mittels des Kolorimeters 7 gemessenen Farbwerte vorgesehen, um Störsignale von umlaufenden mechanischen Komponenten des Gelieraggregates 2 zu eliminieren. Dementsprechend umfasst das Steuerprogramm der elektronischen Steuerung 14 eine optionale Routine mit variabler, insbesondere in Abhängigkeit von der Drehzahl des Gelieraggregats 2 stellbarer Zykluszeit für die Filterung der Farbwerte des Kolorimeters 7.

In einer vorteilhaften Ausführungsform der Erfindung ist eine Datenbank 16 vorgesehen, die in die elektronische Steuerung 14 integriert oder an diese angebunden ist. Die Datenbank 16 dient zur Aufzeichnung und Bereitstellung von Prozessdaten über lange Zeiträume und bildet eine wesentliche Komponente für eine wissensbasierte Regelung des Farbwertes E1. Insbesondere können die in der Datenbank 16 gespeicherten Prozessdaten für die Vorausberechnung der mittels der Dosiereinrichtung 6 pro Zeiteinheit hinzuzufügenden Farbstoffmengen auf Basis des Durchsatzes an polymerem Werkstoff 10 genutzt werden. Im Rahmen der Erfindung ist die Verwendung verschiedener Regelalgorithmen, unter anderem auf Basis von Fuzzy-Logik oder neuronalen Netzen vorgesehen. Die in der Datenbank 16 gespeicherten Prozessdaten werden für die Erstellung derartiger Regelalgorithmen und/oder für die Prozessregelung an sich genutzt.

Wie in Fig. 3 gezeigt, wird für den ersten Regelkreis 15 ein Sollwert F1' für den Farbwert E1 der Formmasse 11 vorgegebenen. Aufgrund von zufälligen Schwankungen oder verfahrensbedingten Veränderungen der Zusammensetzung und/oder der Menge des dem Gelieraggregat 2 pro Zeiteinheit zugeführten polymeren Werkstoffs 10 kann der mit dem Kolorimeter 7 gemessene Farbwert E1 von dem Sollwert E1' abweichen. Sofern die Differenz $AE1 = E1 - E1'$ zwischen dem aktuellen Farbwert E1 und dem Sollwert F1' einen vorgegebenen negativen oder positiven Schwellwert unter- bzw. überschreitet, werden gemäß dem Algorithmus des Regelkreises 15 aus der Differenz AE1 Stellwerte bzw. Steuersignale berechnet und an die entsprechenden Stellglieder übertragen. Insbesondere werden Stellwerte bzw. Steuersignale an Fördereinrichtungen, wie Pumpen oder Förderschnecken für die verschiedenen, in separaten Behältern vorgehaltenen Farbstoffe der Dosiereinrichtung 6 übertragen. Der Sollwert E1' wird vor dem Start einer Produktionscharge in die elektronische Steuerung 14 eingelesen und üblicherweise bis zur Fertigstellung der Produktionscharge konstant gehalten. In einer alternativen Ausführungsform der Erfindung wird der Sollwert E1' im Laufe einer Produktionscharge variiert. Der Sollwert E1' kann mittels Tastatur, Barcodelesegerät oder dergleichen eingegeben oder von einer Datenquelle, wie der Datenbank 16 eingelesen werden.

In einer vorteilhaften Weiterbildung der Erfindung ist zusätzlich zu dem ersten Kolorimeter 7 ein zweites Kolorimeter 8 für die Messung des Farbwertes E2 der Folie 12 an die elektronische Steuerung 14 angeschlossen. Die Folie 12 wird mittels einer Lichtquelle, beispielsweise einer Halogenlampe oder einer LED (Light Emitting Diode), die in dem Kolorimter 8 integriert oder hiervon separat ausgebildet ist, beleuchtet. In dieser Weiterbildung der Erfindung umfasst die elektronische Steuerung 14 neben dem ersten Regelkreis 15 einen zweiten Regelkreis 17, der gemäß einem Regelalgorithmus aus einer Differenz $\Delta E2 = E2 - E2'$ zwischen dem mittels des zweiten Kolorimeters 8 gemessenen Farbwerts E2 und einem vorgegebenen Sollwert E2' einen Sollwert E1' berechnet und an den ersten Regelkreis 15 übergibt. Der von dem zweiten Regelkreis 17 ermittelte Sollwert E1' kann im Laufe einer Produktioncharge variieren. Die Verwendung eines zweiten Kolorimeters 8 ist besonders vorteilhaft, wenn der Farbwert E2 der Folie 12 merklich von dem Farbwert E1 der Formmasse 11 abweicht. Merkliche Abweichungen zwischen E1 und E2 können u.a. bei der Folienfertigung mittels Kalander auftreten. Im Kalander ist die Formmasse 11 bzw. 11' einer Temperatur im Bereich von 160 bis 210 °C und einem hohen mechanischen Druck ausgesetzt, wodurch u.a. der Polymerisationsgrad (DP) der Formmasse 11' gemindert wird. Zudem können die Formmasse 11 und die Folie 12 unterschiedliche optische Eigenschaften, wie z.B. unterschiedliche optische Reflexion der Oberfläche und ggf. unterschiedliche Streuung im Volumen aufgrund von Dichteschwankungen aufweisen.

Durch den Einsatz von zwei Regelkreisen 15 und 17 mit jeweils einem oder mehreren Kolorimetern 7 und 8 stellt die Erfindung ein Verfahren und eine Vorrichtung für die schnelle Korrektur des relevanten Farbwertes E2 zur Verfügung. In einer zweckmäßigen Ausführungsform der Erfindung ist eine weitere Datenbank 18 vorgesehen, die in die elektronische Steuerung 14 integriert oder an diese angebunden ist. Die Datenbank 18 dient zur Aufzeichnung und Bereitstellung von Prozessdaten für den zweiten Regelkreis 17 und bildet eine wesentliche Komponente für eine wissensbasierte Berechnung des Sollwerts E1'. Insbesondere können die in der Datenbank 18 gespeicherten Prozessdaten für die Erstellung einer auf Fuzzy-Logik basierenden Berechnung des Sollwerts E1' genutzt werden. Im Rahmen der Erfindung ist die Verwendung verschiedener Berechnungsalgorithmen für den Sollwert E1', unter anderem auf Basis von Fuzzy-Logik oder neuronalen Netzen vorgesehen.

Für den zweiten Regelkreis 17 wird ein Sollwert E2' für den Farbwert E2 der Folie 12 vorgegebenen. Der Sollwert E2' wird vor dem Start einer Produktionscharge in die elektronische Steuerung 14 eingelesen und bis zur Fertigstellung der Produktionscharge konstant gehalten. Der Sollwert E2' wird mittels Tastatur, Barcodelesegerät oder dergleichen eingegeben oder von einer Datenquelle, wie der Datenbank 18 eingelesen.

In einer Weiterbildung der Erfindung ist zudem ein in Fig. 3 nicht gezeigter Temperatursensor vorgesehen, der eingerichtet ist, die Temperatur der Folie 12 an bzw. nahe der Messposition für den Farbwert E2 zu ermitteln und der mit der elektronischen Steuerung 14 verbunden ist. Das von dem Temperatursensor an die elektronische Steuerung 14 übertragene Signal dient zur Kalibrierung des mit dem Kolorimeter 8 gemessenen Farbwertes E2.

Die Farbwerte $E_k = (L^*_k, a^*_k, b^*_k)$ einer nach dem erfindungsgemäßen Verfahren hergestellten Folie werden mit einem Kolorimeter ermittelt, das wie vorstehend im Zusammenhang mit dem Kolorimeter 7 und 8 erläutert, als Spektrometer oder als Farbkamera ausgebildet ist. Vorzugsweise werden die Farbwerte $E_k$ an der gleichen Folienposition in Transversalrichtung, d.h. senkrecht zur Maschinenrichtung bzw. senkrecht zur Längsachse der Folienbahn gemessen. Hierbei werden Schwankungen der gemessenen Farbwerte aufgrund von Folieninhomogenitäten in Transversalrichtung, die gegebenenfalls durch Querstreckung, insbesondere durch den in Fachkreisen als "Bow" bezeichneten Effekt verursacht sind, reduziert. In Maschinenrichtung werden die Farbwerte $E_k$ äquidistant in einem konstanten Abstand s von etwa 1 m bis 100 m voneinander gemessen, wobei der Abstand zwischen zwei benachbarten Messpositionen um $\pm$ 5 %, d.h. um einen Betrag von $\pm$ 0,05·s von dem für die Messung vorgegebenen Abstand s abweichen kann.

Vorzugsweise werden die Farbwerte E1, E2 und $E_k$ gemäß DIN ISO 6174:2007-10 (D) ermittelt. Sofern die verwendeten Kolorimeter 7 und 8 sowie das zur Farbmessung an einer erfindungsgemäß erzeugten Folie eingesetzte Kolorimeter, wie beispielsweise eine RGB-Farbkamera nicht im L*a*b*-Farbraum messen, werden die erhaltenen Farbwerte gemäß DIN ISO 6174:2007-10 (D) in die entsprechenden L*a*b*-Werte umgerechnet. Hierbei erfolgt die Transformation vom RGB-Farbraum in den L*a*b*-Farbraum bevorzugt über XYZ-Farbkoordinaten.

## Patentansprüche

1. Verfahren zur Herstellung einer Folie (12), umfassend die Schritte

    (a) Plastifizieren eines polymeren Werkstoffes (10) und Vermischen mit einem oder mehreren Farbstoffen zu einer Formmasse (11, 11') mittels eines mit einer Dosiereinrichtung (6) für Farbstoffe ausgestatteten Gelieraggregats (2);

(b) optionales Zwischenlagern der in Schritt (a) erhaltenen Formmasse (11');

(c) Beschicken einer Formeinrichtung (4) mit der Formmasse (11'); und

(d) Erzeugen der Folie (12);

wobei das Mengenverhältnis von Farbstoff zu polymerem Werkstoff (10) mittels eines Kolorimeters (7) und einer elektronischen Steuerung (14) automatisch geregelt wird,

in Schritt (a) an der in dem Gelieraggregat (2) befindlichen Formmasse (11) Farbwerte gemessen und als Signal an die elektronische Steuerung (14) übertragen werden **dadurch gekennzeichnet, dass**

in Schritt (d) an der Folie (12) mittels eines weiteren Kolorimeters (8) weitere Farbwerte gemessen und als Signal an die elektronische Steuerung (14) übertragen werden.

2. Verfahren nach Anspruch 1, **dadurch gekennzeichnet, dass** der dem Gelieraggregat (2) zugeführte polymere Werkstoff (10) Rezyklat enthält.

3. Verfahren nach Anspruch 1 oder 2, **dadurch gekennzeichnet, dass** die Menge des dem Gelieraggregat (2) pro Zeiteinheit zugeführten polymeren Werkstoffes (10) gemessen und als Signal an die elektronische Steuerung (14) übertragen wird.

4. Vorrichtung (1) umfassend ein mit einer Dosiereinrichtung (6) für einen oder mehrere Farbstoffe ausgestattetes Gelieraggregat (2) zum Plastifizieren und Vermischen eines polymeren Werkstoffs (10) mit Farbstoff zu einer Formmasse (11, 11'), ein erstes Kolorimeter (7) und eine mit der Dosiereinrichtung (6) und dem ersten Kolorimeter (7) verbundene elektronische Steuerung (14) zur automatischen Regelung des Mengenverhältnisses von Farbstoff zu polymerem Werkstoff (10) und eine Formeinrichtung (4) zum Erzeugen einer Folie (12),

wobei das erste Kolorimeter (7) eingerichtet ist, von der in dem Gelieraggregat (2) enthaltenen Formmasse (11) emittierte elektromagnetische Strahlung zu detektieren **dadurch gekennzeichnet, dass**

die Vorrichtung (1) ein zweites, mit der elektronischen Steuerung (14) verbundenes Kolorimeter (8) umfasst, das eingerichtet ist, von der Folie (12) emittierte elektromagnetische Strahlung zu detektieren.

5. Vorrichtung (1) nach Anspruch 4, **dadurch gekennzeichnet, dass** das erste Kolorimeter (7) mittels eines Lichtleiters mit dem Innenraum des Gelieraggregates (2) gekoppelt ist.

6. Vorrichtung (1) nach Anspruch 5, **dadurch gekennzeichnet, dass** das erste Kolorimeter (7) mittels einer Glasfaser mit dem Innenraum des Gelieraggregates (2) gekoppelt ist.

7. Vorrichtung (1) nach einem oder mehreren der Ansprüche 4 bis 6, **dadurch gekennzeichnet, dass** die Vorrichtung (1) eine mit der elektronischen Steuerung (14) verbundene Zuführung (5) zum Beschicken des Gelieraggregates (2) mit polymerem Werkstoff (10) umfasst, wobei die elektronische Steuerung (14) und die Zuführung (5) eingerichtet sind, die Menge des dem Gelieraggregat (2) pro Zeiteinheit zugeführten polymeren Werkstoffs (10) zu regeln.

8. Vorrichtung (1) nach einem oder mehreren der Ansprüche 4 bis 7, **dadurch gekennzeichnet, dass** die Vorrichtung (1) eine mit der elektronischen Steuerung (14) verbundene Zuführung (5) zum Beschicken des Gelieraggregates (2) mit polymerem Werkstoff (10) umfasst, wobei die Zuführung (5) eingerichtet ist, die Menge des dem Gelieraggregat (2) pro Zeiteinheit zugeführten polymeren Werkstoffs (10) zu messen und als Signal an die elektronische Steuerung (14) zu übertragen.

9. Vorrichtung (1) nach einem oder mehreren der Ansprüche 4 bis 8, **dadurch gekennzeichnet, dass** das erste und zweite Kolorimeter (7, 8) unabhängig voneinander einen oder mehrere optisch absorbierende Bandpassfilter oder wellenlängendispersive Beugungselemente umfassen.

10. Vorrichtung (1) nach Anspruch 9, **dadurch gekennzeichnet, dass** das erste und zweite Kolorimeter (7, 8) unabhängig voneinander Gitter, Prismen oder einen oder mehrere optoelektronische Sensoren umfassen.

11. Vorrichtung (1) nach einem oder mehreren der Ansprüche 4 bis 10, **dadurch gekennzeichnet, dass** die Vorrichtung (1) einen oder mehrere mit der elektronischen Steuerung (14) verbundene Temperatursensoren zum Messen der Temperatur der Formmasse (11) und/oder der Folie (12) umfasst.

**12.** Vorrichtung (1) nach Anspruch 11, **dadurch gekennzeichnet, dass** die Vorrichtung (1) eine oder mehrere mit der elektronischen Steuerung (14) verbundene Infrarotkameras umfasst.

**13.** Folie (12), hergestellt nach einem Verfahren gemäß Anspruch 1, 2 oder 3 aus einem polymeren Werkstoff (10) und Farbstoffen mit einer Breite von 0,1 bis 6 m, einer Länge von 100 bis 10000 m, lokalen Farbwerten $E_k = (L^*_k, a^*_k, b^*_k)$ und einem mittleren Farbwert $E_M = (L^*_M, a^*_M, b^*_M)$, wobei

$$L^*_M = \frac{1}{N}\sum_{k=1}^{N} L^*_k \qquad ;$$

$$a^*_M = \frac{1}{N}\sum_{k=1}^{N} a^*_k \qquad ;$$

$$b^*_M = \frac{1}{N}\sum_{k=1}^{N} b^*_k \qquad ;$$

N eine natürliche Zahl von 5 bis 100 ist,
**dadurch gekennzeichnet, dass**
Abweichungen $\Delta E_k$ der lokalen Farbwerte $E_k$ von dem mittleren Farbwert $E_M$ kleiner als 1,0 sind, mit

$$\Delta E_k = \sqrt{(L^*_k - L^*_M)^2 + (a^*_k - a^*_M)^2 + (b^*_k - b^*_M)^2}$$

und die Farbwerte $E_k$ in Längsrichtung der Folie in einem Abstand von s ± 0,05·s mit s von 1 bis 100 m gemessen werden.

**14.** Folie (12) nach Anspruch 13, **dadurch gekennzeichnet, dass** die Abweichungen $\Delta E_k$ der lokalen Farbwerte $E_k$ von dem mittleren Farbwert $E_M$ kleiner als 0,8 , insbesondere kleiner als 0,6 , vorzugsweise kleiner als 0,4 , bevorzugt kleiner als 0,3 , speziell bevorzugt kleiner als 0,2 und besonders bevorzugt kleiner als 0,1 sind.

**Claims**

**1.** Process for the production of a foil (12), comprising the steps of

(a) plastification of a polymeric material (10) and mixing with one or more dyes to give a molding composition (11, 11') by means of a gelling assembly (2) equipped with a., metering device (6) for dyes;
(b) optional intermediate storage of the molding composition (11') obtained in step (a);
(c) supplying the molding composition (11') to a molding device (4); and
(d) producing the foil (12);

where the quantitative ratio of dye to polymeric material (10) is regulated automatically by means of a colorimeter (7) and an electronic control system (14),
in step (a) color coordinates are measured on the molding composition (11) located in the gelling assembly (2) and are transmitted as signal to the electronic control device (14),
**characterized in that**
in step (d) further color coordinates are measured by means of a further colorimeter (8) on the foil (12) and are transmitted as signal to the electronic control system (14).

**2.** Process according to Claim 1, **characterized in that** the polymeric material (10) introduced into the gelling assembly (2) comprises recyclate.

**3.** Process according to Claim 1 or 2, **characterized in that** the amount of the polymeric material (10) introduced per unit of time into the gelling assembly (2) is measured and transmitted as signal to the electronic control system (14).

**4.** Apparatus (1) comprising a gelling assembly (2) which has a metering device (6) for one or more dyes and which is intended for the plastification and mixing of a polymeric material (10) with dye to give a molding composition (11, 11'), a first colorimeter (7), and an electronic control system (14) which has connection to the metering device (6) and to the first colorimeter (7) and which is intended for the automatic regulation of the quantitative ratio of dye to polymeric material (10), and a molding device (4) for the production of a foil (12),
where the first colorimeter (7) is equipped to detect electromagnetic radiation emitted from the molding composition (11) present in the gelling assembly (2),
**characterized in that**
the apparatus (1) comprises a second colorimeter (8) which has connection to the electronic control system (14) and which is equipped to detect electromagnetic radiation emitted from the foil (12) .

**5.** Apparatus (1) according to Claim 4, **characterized in that** the first colorimeter (7) is coupled by means of an optical conductor to the space within the gelling assembly (2).

**6.** Apparatus (1) according to Claim 5, **characterized in that** the first colorimeter (7) is coupled by means of a glass fiber to the space within the gelling assembly (2).

**7.** Apparatus (1) according to one or more of Claims 4 to 6, **characterized in that** the apparatus (1) comprises a supply system (5) which has connection to the electronic control system (14) and which is intended for supplying polymeric material (10) to the gelling assembly (2), where the electronic control system (14) and the supply system (5) are equipped to regulate the quantity of the polymeric material (10) introduced per unit of time into the gelling assembly (2).

**8.** Apparatus (1) according to one or more of Claims 4 to 7, **characterized in that** the apparatus (1) comprises a supply system (5) which has connection to the electronic control system (14) and which is intended for supplying polymeric material (10) to the gelling assembly (2), where the supply system (5) is equipped to measure the quantity of the polymeric material (10) introduced per unit of time into the gelling assembly (2), and to transmit said quantity as signal to the electronic control system (14).

**9.** Apparatus (1) according to one or more of Claims 4 to 8, **characterized in that** the first and second colorimeters (7, 8) mutually independently comprise one or more optically absorptive bandpass filters or wavelength-dispersive deflection elements.

**10.** Apparatus (1) according to Claim 9, **characterized in that** the first and second colorimeters (7, 8) mutually independently comprise gratings, prisms, or one or more optoelectronic sensors.

**11.** Apparatus (1) according to one or more of Claims 4 to 10, **characterized in that** the apparatus (1) comprises one or more temperature sensors connected to the electronic control system (14) to measure the temperature of the molding composition (11) and/or of the foil (12).

**12.** Apparatus (1) according to Claim 11, **characterized in that** the apparatus (1) comprises one or more infrared cameras connected to the electronic control system (14).

**13.** Foil (12), produced by a process according to Claim 1, 2 or 3, made of a polymeric material (10) and of dyes with width from 0.1 to 6 m, length from 100 to 10 000 m, local color coordinates $E_k = (L^*_k, a^*_k, b^*_k)$, and an average color coordinate $E_M = (L^*_M, a^*_M, b^*_M)$ where

$$L^*_M = \frac{1}{N}\sum_{k=1}^{N} L^*_k \qquad ;$$

$$a^*_M = \frac{1}{N}\sum_{k=1}^{N} a^*_k \qquad ;$$

$$b_M^* = \frac{1}{N} \sum_{k=1}^{N} b_k^* \qquad ;$$

N is a natural number from 5 to 100,
**characterized in that**
deviations $\Delta E_k$ of the local color coordinates $E_k$ from the average color coordinate $E_M$ are smaller than 1.0, where

$$\Delta E_k = \sqrt{(L_k^* - L_M^*)^2 + (a_k^* - a_M^*)^2 + (b_k^* - b_M^*)^2}$$

and the color coordinates $E_k$ in the longitudinal direction of the foil are measured at a distance of $s \pm 0.05 \cdot s$, where s is from 1 to 100 m.

14. Foil (12) according to Claim 13, **characterized in that** the deviations $\Delta E_k$ of the local color coordinates $E_k$ from the average color coordinate $E_M$ are smaller than 0.8, in particular smaller than 0.6, preferentially smaller than 0.4, preferably smaller than 0.3, especially preferably smaller than 0.2, and particularly preferably smaller than 0.1.

**Revendications**

1. Procédé de fabrication d'un film (12), comprenant les étapes consistant à :

(a) plastifier un matériau polymère (10) et le mélanger avec un ou plusieurs colorant(s) pour donner une masse de moulage (11, 11') au moyen d'une unité de gélification (2) équipée d'un dispositif de dosage (6) pour colorants ;
(b) éventuellement stocker de manière provisoire la masse de moulage (11') obtenue à l'étape (a) ;
(c) approvisionner un dispositif de moulage (4) avec la masse de moulage (11') ; et
(d) produire le film (12) ;

dans lequel le rapport quantitatif du colorant sur le matériau polymère (10) est régulé de manière automatique au moyen d'un colorimètre (7) et d'une commande électronique (14), des valeurs de couleur sont mesurées à l'étape (a) au niveau de la masse de moulage (11) se trouvant dans l'unité de gélification (2) et sont transmises sous forme de signal à la commande électronique (14), **caractérisé en ce que**
d'autres valeurs de couleur sont mesurées au niveau du film (12) à l'étape (d) au moyen d'un colorimètre (8) supplémentaire et sont transmises sous forme de signal à la commande électronique (14).

2. Procédé selon la revendication 1, **caractérisé en ce que** le matériau polymère (10) alimenté vers l'unité de gélification (2) contient un matériau recyclé.

3. Procédé selon la revendication 1 ou 2, **caractérisé en ce que** la quantité du matériau polymère (10) alimenté vers l'unité de gélification (2) par unité de temps est mesurée et transmise sous forme de signal à la commande électronique (14).

4. Dispositif (1), comprenant une unité de gélification (2) équipée d'un dispositif de dosage (6) pour un ou plusieurs colorant(s) afin de plastifier et mélanger un matériau polymère (10) avec du colorant pour donner une masse de moulage (11, 11'), un premier colorimètre (7) et une commande électronique (14) reliée au dispositif de dosage (6) et au premier colorimètre (7) afin de réguler de manière automatique le rapport quantitatif du colorant sur le matériau polymère (10), et un dispositif de formage (4) afin de produire un film (12), dans lequel le premier colorimètre (7) est conçu pour détecter un rayonnement électromagnétique émis par la masse de moulage (11) contenue dans l'unité de gélification (2), **caractérisé en ce que** le dispositif (1) comprend un second colorimètre (8) relié à la commande électronique (14) et conçu pour détecter un rayonnement électromagnétique émis par le film (12).

5. Dispositif (1) selon la revendication 4, **caractérisé en ce que** le premier colorimètre (7) est couplé avec l'intérieur de l'unité de gélification (2) au moyen d'un guide optique.

6. Dispositif (1) selon la revendication 5, **caractérisé en ce que** le premier colorimètre (7) est couplé avec l'intérieur de l'unité de gélification (2) au moyen d'une fibre de verre.

7. Dispositif (1) selon l'une quelconque ou plusieurs des revendications 4 à 6, **caractérisé en ce que** le dispositif (1) comprend une alimentation (5) reliée à la commande électronique (14) afin d'approvisionner l'unité de gélification (2) en matériau polymère (10), dans lequel la commande électronique (14) et l'alimentation (5) sont conçues pour réguler la quantité du matériau polymère (10) alimenté vers l'unité de gélification (2) par unité de temps.

8. Dispositif (1) selon l'une quelconque ou plusieurs des revendications 4 à 7, **caractérisé en ce que** le dispositif (1) comprend une alimentation (5) reliée à la commande électronique (14) afin d'approvisionner l'unité de gélification (2) en matériau polymère (10), dans lequel l'alimentation (5) est conçue pour mesurer la quantité du matériau polymère (10) alimenté vers l'unité de gélification (2) par unité de temps et pour la transmettre sous forme de signal à la commande électronique (14).

9. Dispositif (1) selon l'une quelconque ou plusieurs des revendications 4 à 8, **caractérisé en ce que** les premier et second colorimètres (7, 8) comprennent indépendamment l'un de l'autre un ou plusieurs filtre(s) passe-bande à absorption optique ou élément(s) de diffraction à dispersion de longueur d'onde.

10. Dispositif (1) selon la revendication 9, **caractérisé en ce que** les premier et second colorimètres (7, 8) comprennent indépendamment l'un de l'autre des grilles, des prismes ou un ou plusieurs capteur(s) optoélectronique(s).

11. Dispositif (1) selon l'une quelconque ou plusieurs des revendications 4 à 10, **caractérisé en ce que** le dispositif (1) comprend un ou plusieurs capteur(s) de température relié(s) à la commande électronique (14) afin de mesurer la température de la masse de moulage (11) et/ou du film (12).

12. Dispositif (1) selon la revendication 11, **caractérisé en ce que** le dispositif (1) comprend une ou plusieurs caméra(s) infrarouge reliée(s) à la commande électronique (14).

13. Film (12) produit grâce à un procédé selon la revendication 1, 2 ou 3 à partir d'un matériau polymère (10) et de colorants et présentant une largeur comprise entre 0,1 et 6 m, une longueur comprise entre 100 et 10 000 m, des valeurs de couleur locales $E_k = (L^*_k, a^*_k, b^*_k)$ et une valeur de couleur moyenne $E_M = (L^*_M, a^*_M, b^*_M)$, dans lequel

$$L^*_M = \frac{1}{N} \sum_{k=1}^{N} L^*_k \qquad ;$$

$$a^*_M = \frac{1}{N} \sum_{k=1}^{N} a^*_k \qquad ;$$

$$b^*_M = \frac{1}{N} \sum_{k=1}^{N} b^*_k \qquad ;$$

N est un nombre naturel compris entre 5 et 100,
**caractérisé en ce que**
les écarts $\Delta E_k$ des valeurs de couleur locales $E_k$ par rapport à la valeur de couleur moyenne $E_M$ sont inférieurs à 1,0, avec

$$\Delta E_k = \sqrt{(L^*_k - L^*_M)^2 + (a^*_k - a^*_M)^2 + (b^*_k - b^*_M)^2}$$

et les valeurs de couleur $E_k$ sont mesurées dans le sens longitudinal du film à une distance de s $\pm$ 0,05·s avec s compris entre 1 et 100 m.

14. Film (12) selon la revendication 13, **caractérisé en ce que** les écarts $\Delta E_k$ des valeurs de couleur locales $E_k$ par rapport à la valeur de couleur moyenne $E_M$ sont inférieurs à 0,8, en particulier inférieurs à 0,6, de manière préférée inférieurs à 0,4, de manière plus préférée inférieurs à 0,3, de manière encore plus préférée inférieurs à 0,2 et de la manière la plus préférée inférieurs à 0,1.

Fig. 1

Fig. 2

EP 2 756 029 B1

Fig. 3

**IN DER BESCHREIBUNG AUFGEFÜHRTE DOKUMENTE**

**In der Beschreibung aufgeführte Patentdokumente**

- US 5723517 A
- EP 0191338 A2
- US 6130752 A
- JP 54023662 A
- US 2003230654 A1
- DE 3303766 A1
- US 5756020 A
- US 20090225341 A1